# EUROPEAN PATENT SPECIFICATION

(11) **EP 2 146 905 B1**
(45) Date of publication and mention of the grant of the patent: **09.07.2014**
(21) Application number: 08734858.7
(22) Date of filing: 28.03.2008
(51) Int. Cl.: B01D 53/26, B65D 5/02, B65D 5/42, B65D 81/26, B65D 90/00

(54) **DESICCANT CONTAINER AND CORRESPONDING KIT**
TROCKENMITTELBEHÄLTER UND ENTSPRECHENDER KIT
CONTENEUR DE DÉSHYDRATANT ET KIT CORRESPONDANT

(30) Priority: 28.03.2007 AU 2007901657 P
(43) Date of publication of application: 27.01.2010
(73) Proprietor: Süd-Chemie IP GmbH & Co. KG, 80333 München (DE)
(72) Inventor: DICK, Stefan, 86706 Weichering (DE); ERDMANN, Mandy, 84028 Landshut (DE); SIMMLER-HÜBENTHAL, Hubert, 85368 Moosburg (DE); WILSON, Stephen, Eric, Glenbrook, NSW 2773 (AU)
(74) Representative: HOFFMANN EITLE
(86) International application number: PCT/EP2008/002486
(87) International publication number: WO 2008/116662

(56) References cited:
- EP-A- 0 212 029
- WO-A-2007/109063
- DE-U- 7 440 161
- DE-U1- 29 504 700
- FR-A- 2 666 304
- JP-A- 11 347 339
- JP-A- 58 020 222
- US-B1- 6 767 521

## Description

This invention relates, generally, to moisture removing devices and, more particularly, to a desiccant container for the removal of moisture from the environment. The invention has particular, but not necessarily exclusive, application in ISO transport containers.

### Background to the Invention

US 6 767 521 B1 relates to a system for hanging a dehumidifying and deodorizing pouch, wherein the weight of the pouch is fully supported by a jacket surrounding the pouch.

In the transportation of goods through different climatic zones, there is a danger of the goods being transported being spoiled as a result of the build up of moisture. This danger is especially pronounced in the case of ISO transport containers which may be shipped into and out of humid zones such as tropical areas.

To counteract this problem, use is made of desiccant containing covers or linings used in the interior of the containers. Such covers or linings at least partially ameliorate the situation but are expensive and there is therefore a desire to re-use them. The Applicant is aware of a container which can be suspended from a wall of the ISO container. This container, however, suffers from a,number of drawbacks such as being very rigid.

### Summary of the Invention

Aspects of the invention are defined in the independent claims which follow this description, namely claims 1 and 19. The dependent claims are directed to optional and preferred features.

According to a first aspect of the invention, there is provided a desiccant container as defined in claim 1. The desiccant container includes
- a hanger element for suspension in a zone from which it is desired to remove moisture;
- a desiccant arrangement comprising- at least one moisture permeable receptacle containing a supply of desiccant, the desiccant arrangement being suspended from the hanger element; and
- a flexible protective sleeve, at least a part of which is moisture permeable, arranged about the desiccant arrangement, wherein the sleeve is mounted on the hanger element independently from the desiccant arrangement.

It will be appreciated that, because the hanger element supports the weight of the desiccant arrangement, the sleeve is not load supporting and can be of a flexible, lightweight material. Thus, the sleeve may be fabricated e.g. from a planar blank of a cellulosic material such as a suitable paper material or cardboard material. As a cardboard material may be used e.g. a corrugated cardboard or a solid-fibre cardboard. The paper material or cardboard material may be treated to render it suitable to receive printed matter.

When humidity is adsorbed by the desiccant arrangement, the desiccant will gain weight. Since the weight of the desiccant material is supported by the hanger element, the hanger element may be provided of sufficient rigidity such that the desiccant container retains its shape and stability during the whole lifetime of the desiccant container. Even if the material of the protective sleeve may become wet during use of the desiccant container and loose its stability, the desiccant container is stably held in place by the hanger.

The protective sleeve includes a mounting formation for mounting to the hanger element. Such mounting element may e.g. be a clip or a clamp to fix the protective sleeve at the hanger element.

Further, the sleeve may have a pair of opposed panels comprising a front panel and a rear panel, an operatively front panel having at least one group of openings to provide the moisture permeability and which allows moisture ingress.

The area of the openings in the protective sleeve preferably comprises more than 2 %, particularly preferred from 6 to 50 %, more preferred from 7 to 30 %, in particular 8 to 20 % of the overall surface of the protective sleeve.

It has been found that this proportion of openings in the sleeve provides particular benefits regarding the kinetics of moisture absorption by the desiccant arrangement as required in a closed container. Containers are exposed to considerable environmental temperature changes, for example temperature changes caused during the day by considerable warming by sunlight during the day to much cooler temperature at night or temperature changes caused by transportation of the container from tropic subtropic climate zones to more arid climate zones. These considerable temperature changes are reflected by considerable changes in the relative humidity of the atmosphere in the container. The preferred proportion of openings in the sleeve surface allow an optimal and rapid access of the moisture to the desiccant in the desiccant arrangement in order to avoid the undesired condensation of water on the container wall or goods present in the container.

According to a further embodiment the openings are of round or rectangular shape and have a diameter of at least 0.5 cm, preferably at least 1.0 cm, more preferred at least 2 cm. Particularly preferred the diameter of the openings is selected within a range of 0.5 to 4 cm. By providing openings of large diameter an easy gas exchange between the interior of the sleeve and the surrounding is achieved. The transportation of humidity within e.g. a closed container is for the most based on diffusion processes and to a small amount on convection. Therefore it is preferred to provide an easy access of the humidity to the desiccant arrangement but at the same time to provide sufficient stability to the protective sleeve such that the desiccant container may be easily handled without a danger to rip or destroy the protective sleeve.

According to a further embodiment, 0.5 to 5 g of desiccant or desiccant containing composition, more preferred 1.0 to 4 g of desiccant or desiccant composition are used per cm² of opening in the sleeve surface. Again, it has been found that this proportion is beneficial to optimize the kinetics of moisture absorption as required in the usual environment of a container.

Preferably, the operatively front panel includes a plurality of spaced groups of openings. Optionally, an operatively rear panel may also include openings which may also be arranged in groups. The openings are preferably arranged in one or more groups or patterns spaced apart on the surface of the protective sleeve. More preferred, the groups of openings are in the shape of one or more regular patterns, in particular rectangular patterns, spaced from each other on the surface of the sleeve. By arranging the openings in groups, larger areas of solid material are obtained in the protective cover thereby increasing the stability of the protective sleeve.

According to an embodiment of the invention, the panels of the sleeve, i.e. the front panel and the rear panel, may be joined along their edges and may be outwardly bowed.

According to a preferred embodiment side panels are arranged between front panel and rear panel to obtain a rectangular tube. Such arrangement in a box shape allows an increase in volume of the protective sleeve and therefore allows an increase in the amount of desiccant that may be placed inside the protective sleeve.

At least one end of each front panel or rear panel may terminate in a closure member which closes off the at least one end of the sleeve. Preferably, both ends of both panels terminate in closure members.

Each closure member may be in the form of a closure flap. When the closure flaps are in their closed configuration, the flaps may define a concave surface.

According to a preferred embodiment, the closure member is formed of two closure flaps aligned in a side-by-side arrangement along an edge of the front panel or rear panel and an opening is provided between the two flaps. The opening may be used to accommodate e.g. a hook of the hanger element.

The flaps may be fixed to the corresponding other panel by a suitable method, e.g. by gluing the flap to a corresponding surface of the other panel. The protective sleeve may then rest on the hanger element with the flap and is held in position e.g. by the hook accommodated in the opening.

According to a particularly preferred embodiment, the opening is arranged adjacent to the edge of the front panel or rear panel. The desiccant container may be fixed e.g. to a wall of a container by inserting the hook e.g. in a loop provided at the wall. The protective sleeve will then abut against the wall with the corresponding panel at which edge the opening is provided.

To hold the flap closing an opening of the protective sleeve firmly in position, according to a preferred embodiment a tab is provided at the closure member of one of the rear panel and the front panel and a slot is provided in the other of the front panel or rear panel for receiving the tab. To secure the closure member in a closed position, the tab may be inserted into the slot. The tab is preferably provided at an edge of the closure member situated opposite to the edge at which the closure member is connected to the front panel or the rear panel, respectively.

Preferably, the tab is received in the slot in a interlocking relation. The closure member is then firmly held in a closed position. It is not necessary to secure the closure member in its closed position by e.g. applying an adhesive to a corresponding section of the closure member to glue said section to a corresponding section on the surface of the corresponding other panel.

The hanger element comprises an elongate member and a hook arranged substantially centrally on the elongate member. The flaps forming the operational upper closure member of the sleeve may have suitable apertures defined therein which, when the flaps are in their closed position, are in alignment, the apertures being dimensioned to allow the hook to pass through the apertures. The hanger element may be of a metal or it may be of a suitable plastics material.

According to a preferred embodiment, the elongate member of the hanger element comprises a shoulder portion connected with one end to the hook and having a turn on the other end to be continued by a straight section extending backwards beyond a position defined by the hook. A desiccant arrangement may then draped on the straight section of the hanger element e.g. by folding the desiccant arrangement over the straight section of the hanger element.

The mounting formation of the sleeve may comprise a pair of opposed holes, a hole being defined in each edge of the sleeve proximate an operatively upper end of the sleeve, and each hole receiving one end of the elongate member of the hanger element to suspend the sleeve from the hanger element.

In another embodiment, the elongate member of the hanger element may extend parallel to the transversal axis of the sleeve to support the sleeve in a substantially horizontal orientation. The operational upper closure member of the sleeve in a closed position will then, directly or indirectly, sit on the elongate member of the hanger element.

The desiccant arrangement may comprise a strip of serially connected desiccant pouches with adjacent pouches being joined together by transversely extending webbing.

According to a further preferred embodiment, the desiccant arrangement comprises a blanket formed of desiccant pouches arranged symmetrically to a central webbing. In such blanket, the desiccant pouches are arranged side-by-side in a longitudinal and a transversal direction. Adjacent pouches are joined by longitudinally and transversally extending webbing such that the webbings form the shape of a grid. Preferably, along one direction of the blanket an even number of puches is arranged. A half of the blanket may then be symmetrically folded over the other half of the blanket with a central webbing forming an edge of the folded blanket.

At least one webbing, preferably the webbing which is centrally arranged in the strip or blanket of pouches, may have an opening defined in it, or the webbing may be perforated by the hook of the hanger element, so that the strip of pouches can be draped over the elongate member of the hanger element prior to being received in the sleeve.

According to a second aspect of the invention, there is provided a desiccant container kit as defined in claim 19. The kit includes, in combination,
- a hanger element;
- a desiccant arrangement comprising at least one moisture permeable receptacle containing a supply of desiccant, the desiccant arrangement being configured to be suspended, in use, from the hanger element; and
- a flexible protective sleeve, at least a part of which is moisture permeable, configured to be mounted, in use, about the desiccant arrangement, wherein the sleeve is mounted on the hanger element independently from the desiccant arrangement.

The sleeve includes a mounting formation for mounting to the hanger element.

There is also described a blank for forming a protective sleeve of a desiccant container, which is not part of the claimed invention, the blank comprising a substantially planar body member of a cellulosic material;
- front and rear panel portion defining lines demarcated in the body member;
- closure flap defining lines demarcated proximate ends of the front and rear panel portions of the body member to define closure flap portions of the body member,
- each closure flap defining line being arcuate and having a length dimension exceeding that of a width of its associated panel portion;
- an aperture defined in at least one of the closure flap portions to facilitate the passage of a part of a hanger element through the flap portion; and
- mounting formations defined in the body member, the mounting formations receiving further parts of the hanger element when the blank has been erected.

The body member may be of a paper material and may have openings defined in it to render it moisture permeable.

A securing formation may be defined along a free side of one of the panels to which the other of the panels is secured to form a sleeve.

### Brief Description of the Drawings

Several embodiments of the invention are now described by way of example with reference to the accompanying drawings in which
Fig. 1 shows a schematic, three dimensional view of a desiccant container, in accordance with an embodiment of the invention;
Fig. 2 shows a schematic front view of a desiccant arrangement placed inside the container of fig. 1;
Fig. 3 shows a three dimensional view of a part of the container of fig. 1 in use;
Fig. 4 shows a front view of a blank, for forming a protective sleeve of a desiccant container;
Fig. 5 shows a schematic, three dimensional view of a desiccant container, in accordance with another embodiment of the invention;
Fig. 6 shows a front view of a blank for forming a protective sleeve of the desiccant container as shown in fig. 5;
Fig. 7 shows several embodiments of a hanger to be used in a desiccant container according to the invention; and
Fig. 8 shows top views (a, b) of desiccant arrangements to be used with the desiccant container shown in fig. 5 and a sectional view of the desiccant arrangement of fig. 8a taken along line B - B.

### Detailed Description of Exemplary Embodiment

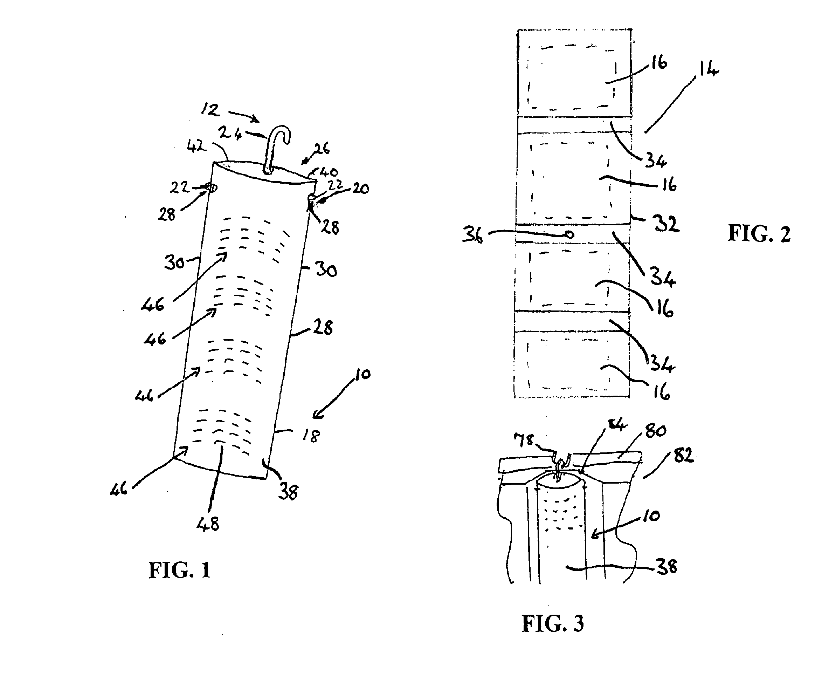

In fig. 1, reference numeral 10 generally designates a desiccant container, in accordance with an embodiment of the invention. The desiccant container 10 includes a hanger element 12 for suspension in a zone from which it is desired to remove moisture. A desiccant arrangement 14 (Fig. 2), comprising a strip 32 of a plurality of serially connected moisture permeable receptacles, each in the form of a sealed pouch 16 and each containing a supply of desiccant, is suspended from the hanger element 12. A flexible protective sleeve 18, at least a part of which is moisture permeable, is mounted about the desiccant arrangement 14. The sleeve 18 includes a mounting formation 20 for mounting to the hanger element 12.

The hanger element 12 comprises an elongate element in the form of a bar 22. A hook 24 is substantially centrally arranged on the bar 22 and projects orthogonally from the bar 22. The hook 24 is configured to project beyond an operatively top end 26 of the sleeve 18.

The hanger element 12 can be fabricated from metal or a suitably strong synthetic plastics material.

The length of the bar 22 exceeds that of the width of the sleeve 18. Thus, the bar 22 projects through the mounting formations of the sleeve 18. The mounting formation 20 of the sleeve 18 therefore comprises a pair of opposed openings 28 in side edges 30 of the sleeve. Ends of the bar 22 project through the openings 28 of the mounting formation 20 of the sleeve 18, in use.

Each receptacle of the desiccant arrangement 14 is in the form of a closed desiccant pouch 16 to form the strip 32 of interconnected pouches 16. Adjacent pouches 16 are separated from each other by transversely extending webbing 34. That webbing 34 centrally arranged in the strip 32 either has a preformed opening 36 formed in it or the hook 24 can be used to puncture the opening 36 through the webbing 34. The strip 32 of pouches 16 is therefore draped over the bar 22 of the hanger element 12, in use, so that the hook 24 projects through the opening 36. It will be appreciated that the load of the desiccant arrangement 14 is therefore carried by the hanger element 12 and is not supported, in any way, by the sleeve 18.

The pouches 16 are made from a membrane of a moisture permeable material and contain desiccant in them. Any suitable material can be used as the desiccant such as, for example, granular elements of a combination of calcium carbonate and starch in the appropriate ratio. Thus, moisture is extracted from the atmosphere by being absorbed by the desiccant in the pouches 16, the moisture passing through the moisture permeable membrane defining the pouches 16 of the desiccant arrangement 14.

The sleeve 18 is made from a flexible paper or unfluted board material having a thickness in the range of approximately 500 µm to 1000 µm, preferably, 600 to 700 µm and, optimally, about 630 µm.

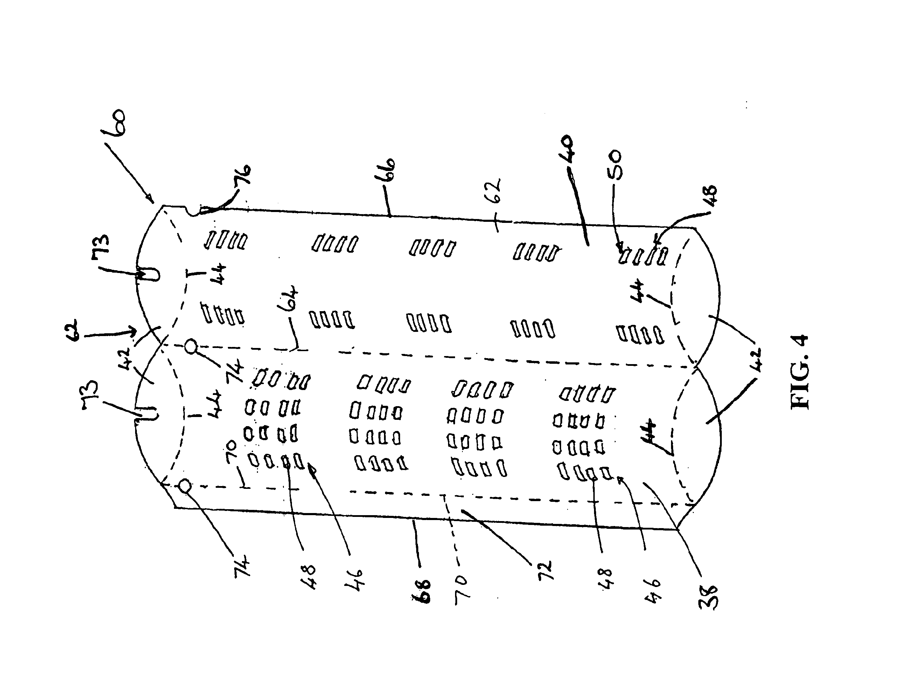

The sleeve 18 comprises an operatively front panel 38 and an operatively rear panel 40. The front panel 38 and the rear panel 40 are joined to each other along the edges 30 of the sleeve 18. As will be described in greater detail below with reference to Fig. 4 of the drawings, each end of each panel 38, 40 terminates in a closure member or closure flap 42 (Fig. 4). The closure flaps 42 close off the ends of the sleeve 18, in use.

The panels 38 and 40 are bowed outwardly to accommodate the desiccant arrangement 14 in the interior of the sleeve 18. Further, the flaps 42 are joined to their associated panels by an arcuate demarcating line 44 so that, when the closure flaps 42 are in their closed configuration, they form concave upper and lower ends of the sleeve 18.

At least the front panel 38 of the sleeve 18 is moisture permeable to allow the ingress of moisture into the interior of the sleeve 18 to be absorbed by the desiccant in the pouches 16 of the desiccant arrangement 14. The moisture permeability of the front panel 38 is provided by a plurality of groups 4 6 (Fig. 1) of openings 48 defined in the front panel 38. Optionally, as shown in Fig. 4 of the drawings, the operatively rear panel 40 of the sleeve 18 also has openings 48 arranged in groups 50.

Referring now to Fig. 4 of the drawings, a blank 60 for the formation of the sleeve 18 of the container 10 is illustrated. The blank 60 comprises a substantially planar body member 62 of the board or paper material. The body member 62 has a first panel defining line '64 extending longitudinally in the body member 62 parallel to side edges 66 and 68 of the body member 62. A second, front panel defining line 70 extends parallel to the line 64 slightly inwardly of the side edge 68. A securing formation in the form of a securing flap 72 is therefore demarcated between the side edge 68 and the line 70.

The lines 64 and 70 demarcate the front panel 38 while the rear panel 40 is demarcated between the line 64 and the side edge 66 of the body member 62.

As described above, the arcuate flap defining lines 44 define ovoid closure flaps 42 at each end of each of the panels 38 and 40.

Apertures, in the form of slots 73, are defined in the operatively upper flaps 42. These slots 73 are dimensioned to accommodate the hook 24 of the hanger element 12 permitting the hook 24 to pass through the slots 73 of the upper closure flaps 42 to permit hanging of the container 10, in use.

Openings 7 4 are defined in the body member 62, proximate an operatively upper end of the body member 62. The openings 7 4 are arranged in the body member 62 to be intersected by the lines 64 and 70 of the body member 62. A further semi-spherical opening 76 is defined at the edge 66 of the body member 62 in horizontal alignment with the openings 74. The openings 74 and the semi-spherical opening 76, together, form the openings 28 of the mounting formations 20 of the sleeve 18 when the blank 60 is erected to form the sleeve 18.

An operatively exterior surface of the body member 62 is treated to permit the application of printable material, such as advertising material, logos, instructions for use, or the like.

To form the sleeve 18, the side edge 66 of the body member 62 is adhesively secured to the flap 72.

In use, the desiccant arrangement 14 is suspended from the bar 22 of the hanger element 12 by inserting the opening 24 of the hanger element 12 through the opening 36 in the webbing 34. The desiccant arrangement 14 is therefore draped over the bar 22 and its weight is supported by the hanger element 12.

The sleeve 18, with the closure flaps 42 in their open configuration, is slid over the suspended desiccant arrangement 14. The closure flaps 42 are moved to their closed configuration after the ends of the bar 22 of the hanger element 12 have been inserted into the openings 28 of the mounting formation 20 of the sleeve. The assembled container 10 is suspended, in use, from an appropriate suspension element 78 (Fig. 3) of a wall 80 of a zone from which it is desired to remove moisture. Typically, the container 10 is used to remove moisture from the interior of an ISO container 82. It will be appreciated that these containers 82 have fluted walls 80 and the container 10 is suspended in a recess 84 defined by the flutes of the wall 80 of the container 82.

The container 10 is suspended with the front panel 38 facing outwardly to permit the ingress of moisture through the openings 48 of the groups 46 of openings in the front panel 38 of the container 10.

It is therefore an advantage of the invention that a desiccant container 10 is provided where most of the weight is carried by the hanger element 12 and, thus, the sleeve 18 can be made of an extremely lightweight material. Also, the container 10 can be assembled rapidly without the need for any specialist training or tools. Even if the sleeve 18 is destroyed by moisture, the desiccant" arrangement 14 will remain suspended from the hanger element 12. Thus the sleeve 18 is decorative and plays no part in supporting the desiccant arrangement 14. The sleeve 18 does not, therefore, have to be of strong or moisture resistant material.

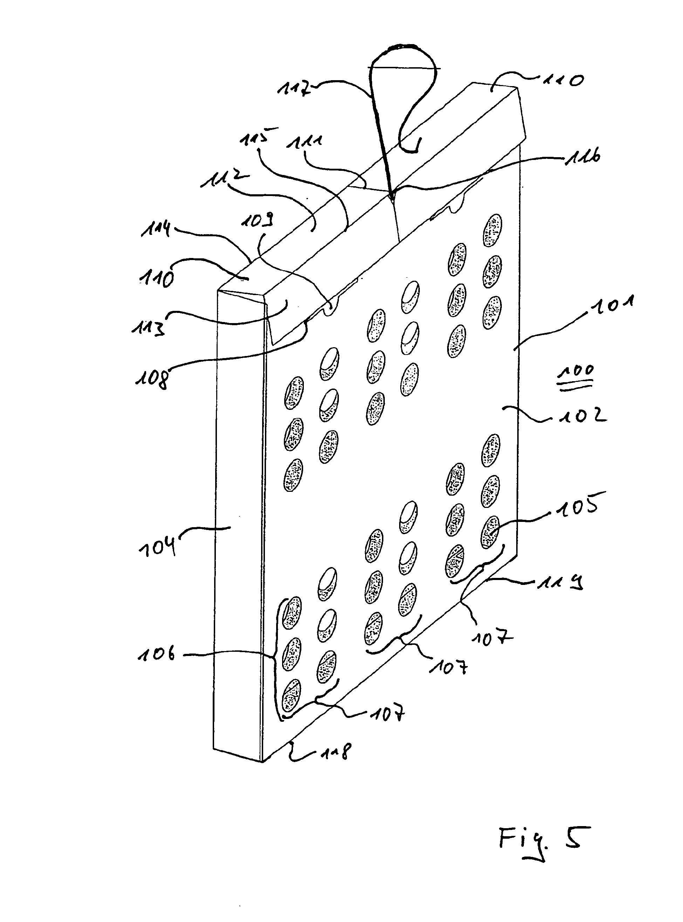

Fig. 5 shows a schematic, three dimensional view of a desiccant container 100, in accordance with another embodiment of the invention. Desiccant container 100 comprises a protective sleeve 101 of a box-like shape. Protective sleeve 101 is made of corrugated cardboard and comprises rear panel 102 and front panel 103 (not visible) arranged opposite to each other. Front panel 103 and rear panel 102 are connected by side panels 104 such that a tube having a rectangular cross-section is obtained. In front panel 103 as well as rear panel 102 are provided openings 105 which allow access of humidity to the interior of protective sleeve 101. Openings 105 are arranged in groups 106 which comprise three subgroups 107 formed of 6 openings 105 each. Further are provided in rear panel 102 two slots 108 to receive tabs 109 in an interlocking relation.

Along an edge 114 of front panel 103 are provided two separate flaps 110 in a side by side configuration defining a narrow slot 111 between them. Each of flaps 110 comprises a first section 112 folded along folding line 114 to cover an upper opening of sleeve 101 and a second section 113 folded along folding line 115 to abut on rear panel 102. At their edges flaps 110 carry tabs 109 which are inserted into slots 108. In the center of narrow slot 111 arranged between flaps 110 at an edge defined by folding line 115 is provided an opening 116 to accommodate a hook 117 of a hanger. The hanger will be explained in further detail below. To cover the opening of sleeve 101 located opposite to the side covered by flaps 110 flaps 118 are provided which are folded and inserted into the interior of the sleeve along edge 119.

Sleeve 101 has the form of a box and therefore has a quite rigid structure. Since hook 117 is arranged at the center of edge 115, the desiccant container will rest with its rear panel 102 against a wall when hinged with hook 117 to a corresponding fixture provided at the wall.

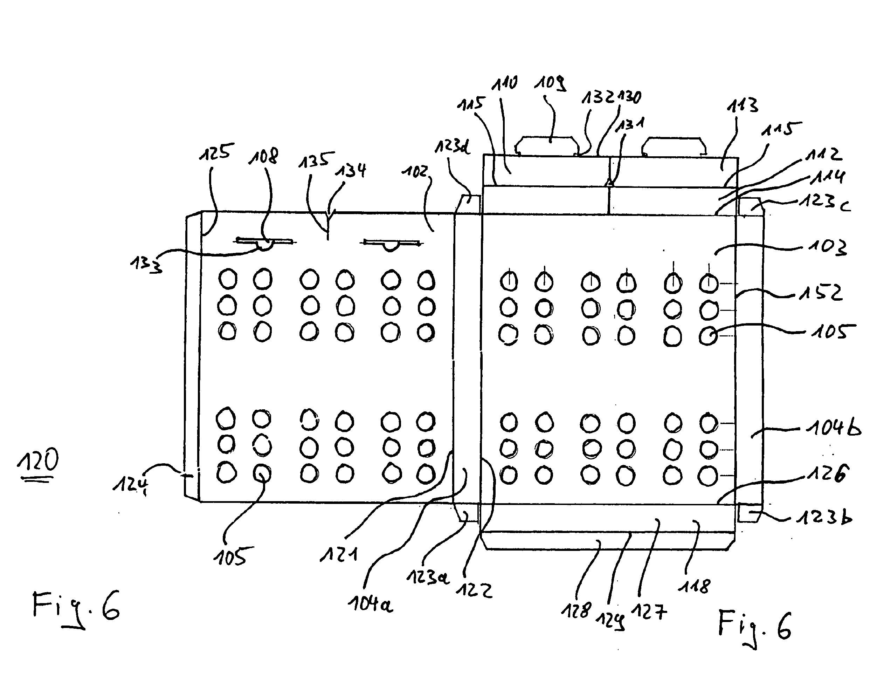

Fig. 6 shows a front view of a blank 120 for forming a protective sleeve of the desiccant container as shown in fig. 5.

Blank 120 comprises a rear panel 102, a front panel 103 and side panels 104a and 104b. Side panel 104a is arranged between rear panel 102 and front panel 103 and is linked to these panels by fold lines 121 and 122. Side panel 104b is linked to an edge of front panel 103 situated opposite to side panel 104a and forms an open end. At the remaining edges of side panels 104a and 104b and linked by folding lines 114 and 126 are situated flaps 123 a-d. At an edge situated opposite to side panel 104a and linked to rear panel 102 by folding line 125 is provided a flap 124. Flap 124 has a narrower width than side panels 104a and 104 b.

At an edge of front panel 103 perpendicular to side panels 104a and 104b and forming a folding line 126 is provided a flap 118 comprising a segment 127 and a tongue 128. Segment 127 and tongue 128 are linked by folding line 129. Segment 127 has about the same width as side panels 104 a,b, whereas tongue 128 may have a narrower width.

Opposite to flap 118 are arranged two flaps 110 which are linked to front panel 103 by folding line 114. Each flap 110 has about the same breadth which corresponds to about half of the breadth of the edge of front panel 103 defined by folding line 114. Each flap 110 comprises a first section 112 and second section 113 linked by folding line 115. Width of first section 112 orthogonally to folding line 114 is slightly larger than width of side panels 104a and 104b such that flap 110 may be folded to cover an opening of the sleeve formed from the blank. In each second section 113 of flaps 110 is provided a cutout 131 in the form of a triangle. Both cutouts 131 of flaps 110 together form the shape of a triangle located centrally on edge 115.

At an edge 130 of second segment 113 is centrally located tab 109. Edge 130 is also acting as folding line, such that tab 109 may be folded backwards. Close to edge 130 are provided undercuts 132 forming an U-shaped blind hole. The width of undercuts 132 is selected slightly larger than the width of the cardboard the blank is made of.

On front panel 103 are provided openings 105 of circular shape which are arranged in groups 106.

Similar to front panel 103 are provided openings 105 on rear panel 102. Additionally are provided slots 108 on rear panel 102. On a side oriented towards apertures 105 slots 108 comprise an arcuate cutout 133. Slots 108 have a width slightly larger than the thickness of the cardboard the blank is made of, such that tabs 109 might be inserted into them. The breadth of slots 108 is slightly smaller than the breadth of tabs 109 such that undercuts 132 of tabs 109 may interlock with the sides of slot 108. Slots 108 are arranged symmetrically towards a middle line of rear panel 102 and the distance of slots 108 from edge 114 is chosen corresponding to the breadth of second section 113 of flaps 110. Centrally on edge 114 of rear panel 102 is provided a cutout 134 in the form of a triangle. The shape and size of the triangle corresponds to the triangle formed by cutouts 131 provided in second sections 113 of flaps 110. At the tip of cutout 134 is provided a short slit 135 proceeding along the middle line of rear panel 102.

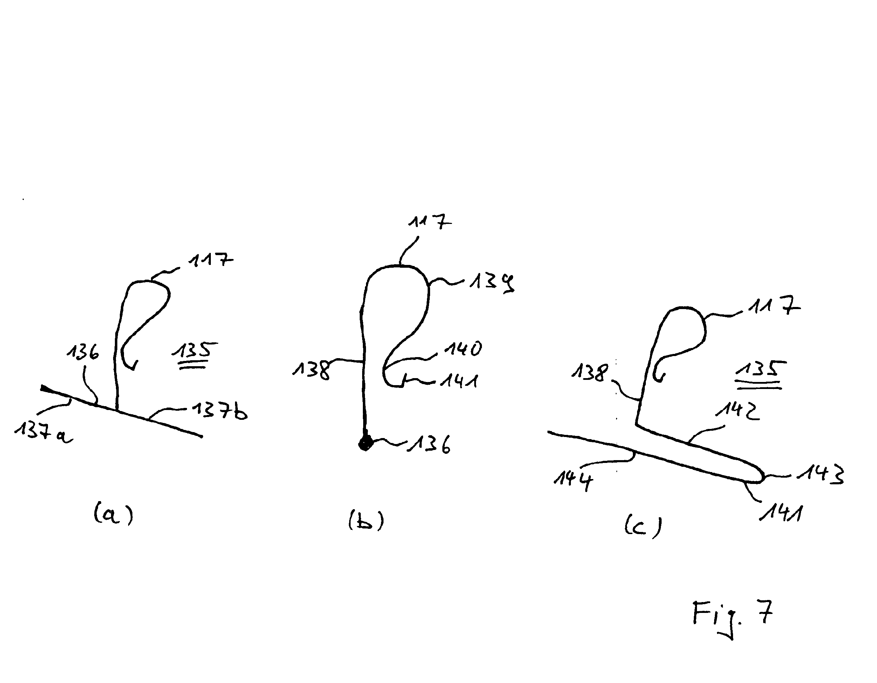

Fig. 7 shows several embodiments of a hanger to be used in a desiccant container according to the invention.

In fig. 7a, b is shown a first embodiment of the hanger to be used with the desiccant container according to the invention. Fig. 7a displays a perspective view whereas fig. 7b is a view onto one side of the hanger. The hanger generally designated as 135 comprises a bar 136 made of a stiff material, e.g. metal or reinforced plastic. Centrally on bar 136 is mounted a hook 117, e.g. by welding. Bar 136 is thereby divided into two shoulders 137a and 137b each having the same length. Hook 117 is oriented orthogonally towards bar 136. This can also be seen from fig. 7(b) which is a view along the axis formed by bar 136. Hook 117 comprises a straight leg 138 extending from bar 136. Straight leg 138 is continued by a first arcuated section 139 which is bent in a direction towards straight leg 138. First arcuated section 139 is continued by a second arcuated section 140 having a curvature opposite to the curvature of first arcuated section 139. Thereby together with straight leg 138 is formed a bottleneck which allows safe fixation of the hook e.g. on a bar. Second arcuate section 140 is terminated by a sharp kink followed by a short straight section 141.

Fig. 7(c) is a perspective view of a second embodiment of a hanger to be used for the desiccant container according to the invention. Hanger 135 comprises a hook 117 having a similar shape as the hook explained with the embodiment of fig. 7(b) above. Mounted to straight leg 138 of hook 117 is a bent bay 141 comprising a shoulder 142 which is continued after a turn 143 by a straight section 144. Hook 117 is situated at about the center of straight section 144 and is oriented orthogonally to shoulder 142 and straight section 144.

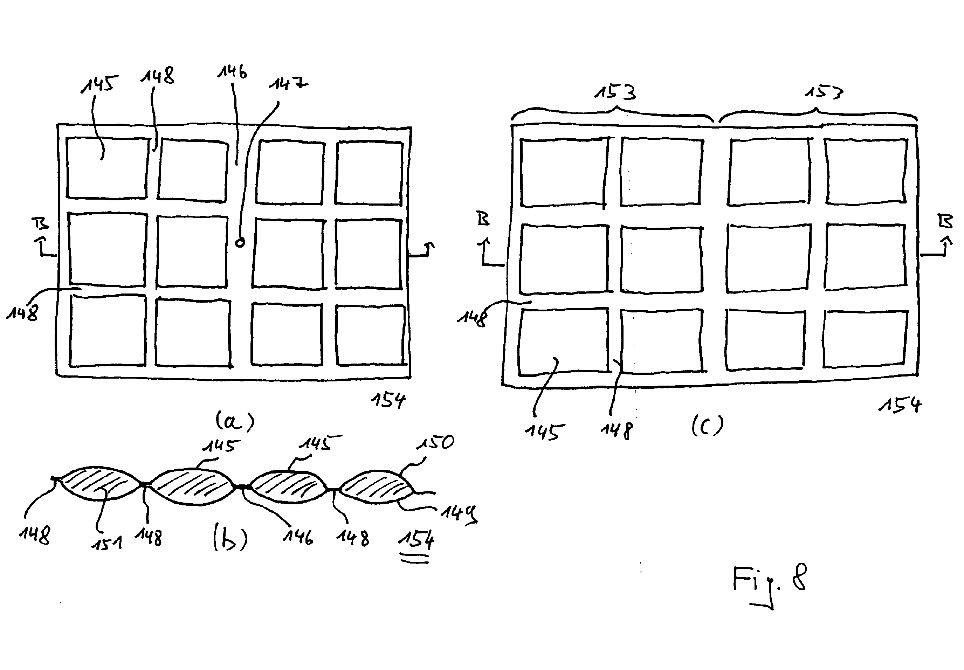

Fig. 8 (a, b) shows top views of desiccant arrangements 154 to be used with a desiccant container according to the invention.

Fig. 8 (a) shows an embodiment of a desiccant arrangement 154 that may be used e.g. together with a hanger as depicted in fig. 7a. The desiccant arrangement comprises pouches 145 which accommodate a desiccant. Pouches 145 are arranged side-by-side in a longitudinal and transversal directions thereby forming a blanket. Adjacent pouches are joined by webbings 148 which are arranged in the shape of a grid. Further, pouches 145 are arranged symmetrically to a central transversely extending webbing 146. At the center of webbing 146 is provided an opening 147. In each half of the desiccant arrangement are provided six pouches 145 disposed in a 2 x 3 arrangement.

Fig. 8 (b) shows a sectional view taken along line "B-B" in fig. 8 (a). The desiccant arrangement comprises a plastic foil 149 to which is welded a fibrous web 150 along welding seams 148 and central webbing 146. Thereby pouches 145 are obtained which are filled with desiccant 151. Fibrous webbing 150 may be permeated by humidity which is then absorbed by the desiccant 151 arranged in pouches 145.

Fig. 8 (c) is a top view on another embodiment of the desiccant arrangement 154 to be used with the desiccant container according to the invention.

The desiccant arrangement of fig. 8 (c) is basically the same as the one explained with reference to fig. 8 (a) with the only difference that no opening is provided in the central webbing 146.

To assemble the desiccant container shown in fig. 5 first the blank displayed in fig. 6 is folded to obtain a protective sleeve 101. The blank is folded backwards along folding lines 125, 121, 122 and 152. Then front surface of flap 124 is glued to back surface of side panel 104b to obtain a rectangular tube. Then flaps 123 a,b are folded backwards towards the interior of the rectangular tube and then the opening is closed by first folding back flap 118 along folding line 126, then folding back tongue 128 along folding line 129 and inserting tongue 128 into the interior of the rectangular tube formed of front panel 102, side panel 104a, rear panel 102 and side panel 104b.

As a next step, the desiccant arrangement shown in fig. 8 (c) is folded along central webbing 146 such that the backsides of halves 153 are placed on each other. Then a hanger 135 as displayed in fig. 7 (c) is inserted between the halves 153 with its straight section 144 such that the desiccant arrangement is draped on the straight section of hanger 135 with both halves 153 of the desiccant arrangement hanging down by the sides of hanger 135. The arrangement of hanger 135 and desiccant arrangement is then inserted into the interior of a box folded from blank 120 as described above. Hook 117 of hanger 135 is held such that the straight leg 138 of hook is placed in cutout 134 of rear panel 102. Then flaps 110 are folded backwards along folding line 114 such that first sections 112 of flaps 110 cover the opening of the box formed from blank 120. Then second section 113 of flap 110 is folded backwards along folding line 115 and tabs 109 are inserted into slots 108. Protective sleeve 101 rests with the panel formed from flaps 110 on shoulder 142 of hanger 135 and therefore only has to carry its own weight whereas the weight of desiccant arrangement is directly carried by hanger 135.

It will be appreciated by persons skilled in the art that numerous variations and/or modifications may be made to the invention as shown in the specific embodiments without departing from the scope of the invention as defined in the appended claims. The present embodiments are, therefore, to be considered in all respects as illustrative and not restrictive.

**Reference signs**

| | | | |
|---|---|---|---|
| 10 | desiccant container | 74 | openings |
| 12 | hanger element | 76 | semi-spherical opening |
| 14 | desiccant arrangement | 78 | suspension element |
| 16 | sealed pouch | 80 | wall |
| 18 | protective sleeve | 82 | ISO container |
| 20 | mounting formation | 84 | recess |
| 22 | bar | 100 | desiccant container |
| 24 | hook | 101 | protective sleeve |
| 26 | operatively top end | 102 | rear panel |
| 28 | opening | 103 | front panel |
| 30 | side edges | 104 | side panel |
| 32 | strip | 105 | openings |
| 34 | transversely extending webbing | 106 | group |
| | | 107 | subgroup |
| 36 | preformed opening | 108 | slot |
| 38 | front panel | 109 | tab |
| 40 | rear panel | 110 | flap |
| 42 | closure member | 111 | narrow slot |
| 44 | arcuate demarcating line | 112 | first section |
| | | 113 | second section |
| 46 | group | 114 | folding line |
| 48 | openings | 115 | folding line |
| 50 | group | 116 | opening |
| 60 | blank | 117 | hook |
| 62 | planar body member | 118 | flap |
| 64 | first panel defining line | 119 | edge |
| | | 120 | blank |
| 66 | edge | 121 | fold line |
| 68 | edge | 122 | fold line |
| 70 | second, front panel defining line | 123 | flap |
| | | 124 | flap |
| 72 | securing flap | 125 | folding line |
| 73 | slot | 126 | folding line |
| 127 | segment | | |
| 128 | tongue | | |
| 129 | folding line | | |
| 130 | edge | | |
| 131 | cutout | | |
| 132 | undercut | | |
| 133 | arcuate cut | | |
| 134 | cutout | | |
| 135 | hanger | | |
| 136 | bar | | |
| 137 | shoulder | | |
| 138 | straight leg | | |
| 139 | first arcuated section | | |
| 140 | second arcuated section | | |
| 141 | bent bar | | |
| 142 | shoulder | | |
| 143 | turn | | |
| 144 | straight section | | |
| 145 | pouch | | |
| 146 | webbing | | |
| 147 | opening | | |
| 148 | welding seam | | |
| 149 | plastic foil | | |
| 150 | fibrous web | | |
| 151 | desiccant | | |
| 152 | folding line | | |
| 153 | half | | |
| 154 | desiccant arrangement | | |

## Claims

1. A desiccant container which includes
- a hanger element (12, 135) for suspension in a zone from which it is desired to remove moisture;
- a desiccant arrangement (14, 154) comprising at least one moisture permeable receptacle containing a supply of desiccant, the desiccant arrangement being suspended from the hanger element (12, 135); and
- a protective sleeve (18, 101), at least a part of which is moisture permeable, arranged about the desiccant arrangement (14, 154), wherein the protective sleeve (18, 101) comprises a mounting formation (20, 116) for mounting to the hanger element (12, 135),
**characterised in that** the hanger element (12, 135) comprises an elongate member of stiff material and a hook (24, 117) arranged substantially centrally on the elongate member; and wherein the sleeve is of a flexible, lightweight material and is mounted on the hanger element (12, 135) independently from the desiccant arrangement, such that the hanger element (12, 135) supports the weight of the desiccant arrangement (14, 154) and the sleeve (18, 101) is not load supporting.

2. The container of claim 1 in which the sleeve (18, 101) is fabricated from a planar blank (60, 120) of a cellulosic material.

3. The container of any one of the preceding claims in which the sleeve (18, 101) has a pair of opposed rear (40, 102) and front (38, 103) panels, an operatively front panel (38, 103) having at least one group of openings (48, 105) to provide the moisture permeability and which allows moisture ingress.

4. The container of claim 3 in which the area of the openings (48, 105) in the protective sleeve comprises from 2 to 50 % of the overall surface of the protective sleeve (16, 101).

5. The container of claim 3 or 4 in which the openings (48, 105) are of round or rectangular shape and have a diameter of at least 0.5 cm.

6. The container of any one of claims 3 to 5 in which the front panel (38) and the rear panel (40) of the sleeve (18) are joined along their edges (66, 68) and are outwardly bowed.

7. The container of claim 3 or 4 in which side panels (104) are arranged between front panel (103) and rear panel (102) to obtain a rectangular tube.

8. The container of any of claims 3 to 6 in which at least one end of said front panel (38, 103) and/or rear panel (40, 102) terminates in a closure member (42, 110, 118) which closes off at least one end of the sleeve (18, 101).

9. The container of claim 8 in which each closure member is in the form of a closure flap (42).

10. The container of claim 8 or 9 in which the closure member is formed of two closure flaps (110) aligned in a sided-by-side arrangement along an edge (114) of the front panel (103) or rear panel (102) and an opening (116) is provided between the two flaps (110).

11. The container of claim 10 in which the opening (116) is arranged adjacent to the edge (114) of the front panel (103) or rear panel (102).

12. The container of any of claims 8 to 11 in which a tab (109) is provided at the closure member (110) of one of the rear panel (102) and the front panel (103) and a slot (108) is provided in the other of the front panel (103) or rear panel (102) for receiving the tab (110).

13. The container of claim 12 in which the tab (110) is received in the slot (108) in an interlocking relation.

14. The container of claim 1 in which the elongate member (141) comprises a shoulder portion (142) connected with one end to the hook (117) and having a turn (143) on the other end to be continued by a straight section (144) extending backwards beyond a position defined by the hook.

15. The container of claim 1 in which the mounting formation (20) of the sleeve (18) comprises a pair of opposed holes (28), each hole receiving one end of the elongate member (22) of the hanger element (12) to suspend the sleeve (18) from the hanger element (12).

16. The container of any one of the preceding claims in which the desiccant arrangement comprises a strip (32) of serially connected desiccant pouches (16) with adjacent pouches (16) being joined together by transversely extending webbing (34).

17. The container of any of claims 1 to 15 in which the desiccant arrangement comprises a blanket formed of desiccant pouches (145) arranged symmetrically to a central webbing (146).

18. The container of claim 16 or 17 in which at least one webbing (34, 146) has an opening (36, 147) defined in it so that the strip or blanket of pouches (16, 145) can be draped over the hanger element (12, 135) prior to being received in the sleeve (18, 101).

19. A desiccant container kit, the kit including, in combination,
- a hanger element (12, 135); the hanger element (12, 135) comprising an elongate member of stiff material and a hook (24, 117) arranged substantially centrally on the elongate member;
- a desiccant arrangement (14, 154) comprising at least one moisture permeable receptacle containing a supply of desiccant, the desiccant arrangement being configured to be suspended, in use, from the hanger element (12, 135); and
- a flexible protective sleeve (18, 101), at least a part of which is moisture permeable, configured to be mounted, in use, about the desiccant arrangement, wherein the sleeve (18, 101) is of a flexible, lightweight material and is mounted on the hanger element (12, 135) independently from the desiccant arrangement (14, 154), such that, in use, the hanger element (12, 135) supports the weight of the desiccant arrangement (14, 154) and the sleeve is not load supporting, and wherein the protective sleeve (18, 101) comprises a mounting formation (20, 116) for mounting, in use, to the hanger element (12, 135).

## Patentansprüche

1. Trockenmittelbehälter, welcher umfasst
- ein Aufhängeelement (12, 135) zur Aufhängung in einem Bereicht, von welchem es gewünscht ist, Feuchtigkeit zu entfernen;
- eine Trockenmittelanordnung (14, 154) mit zumindest einem feuchtigkeitsdurchlässigen Behältnis, das einen Trockenmittelvorrat enthält, wobei die Trockenmittelanordnung von dem Aufhängeelement (12, 135) aufgehängt ist; und
- eine schützende Hülle (18, 101), von welcher zumindest ein Teil feuchtigkeitsdurchlässig ist, um die Trockenmittelanordnung (14, 154) herum angeordnet, wobei die schützende Hülle (18, 101) eine Anbringungsanordnung (20, 116) zum Anbringen an dem Aufhängeelement (12, 135) umfasst,
**dadurch gekennzeichnet, dass** das Aufhängeelement (12, 135) ein längliches Element aus steifem Material und einen Haken (24, 117) umfasst, der im Wesentlichen mittig an dem länglichen Element angeordnet ist; und
wobei die Hülle aus einem flexiblen, leichtgewichtigen Material ist und an dem Aufhängeelement (12, 135) unabhängig von der Trockenmittelanordnung angebracht ist, derart dass das Aufhängeelement (12, 135) das Gewicht der Trockenmittelanordnung (14, 154) stützt und die Hülle (18, 101) nicht lasttragend ist.

2. Behälter nach Anspruch 1, bei welchem die Hülle (18, 101) aus einem ebenen Zuschnitt (60, 120) aus einem zellulosehaltigem Material hergestellt ist.

3. Behälter nach einem der vorhergehenden Ansprüche, bei welchem die Hülle (18, 101) ein Paar an gegenüberliegenden hinteren (40, 102) und vorderen (38, 103) Platten aufweist, eine funktionsfähige vordere Platte (38, 103) mit zumindest einer Gruppe an Öffnungen (48, 105), um die Feuchtigkeitsdurchlässigkeit vorzusehen, und welche Feuchtigkeitseintritt gestattet.

4. Behälter nach Anspruch 3, bei welchem der Bereich der Öffnungen (48, 105) in der schützenden Hülle von 2 bis 50% der Gesamtoberfläche der schützenden Hülle (16, 101) umfasst.

5. Behälter nach Anspruch 3 oder 4, bei welchem die Öffnungen (48, 105) eine runde oder rechteckige Form aufweisen und einen Durchmesser von zumindest 0,5cm aufweisen.

6. Behälter nach einem der Ansprüche 3 bis 5, bei welchem die vordere Platte (38) und die hintere Platte (40) der Hülle (18) entlang ihrer Kanten (66, 68) gefügt sind und nach außen gebeugt sind.

7. Behälter nach Anspruch 3 oder 4, bei welchem Seitenplatten (104) zwischen der vorderen Platte (103) und hinteren Platte (102) angeordnet sind, um ein rechteckiges Rohr zu erhalten.

8. Behälter nach einem der Ansprüche 3 bis 6, bei welchem zumindest ein Ende der vorderen Platte (38, 103) und/oder hinteren Platte (40, 102) in einem Verschlusselement (42, 110, 118) endet, welches zumindest ein Ende der Hülle (18, 101) absperrt.

9. Behälter nach Anspruch 8, bei welchem jedes Verschlusselement in der Form einer Verschlussklappe (42) ist.

10. Behälter nach Anspruch 8 oder 9, bei welchem das Verschlusselement aus zwei Verschlussklappen (110) ausgebildet ist, die in einer Seite-an-Seite-Anordnung entlang einer Kante (114) der vorderen Platte (103) oder hinteren Platte (102) ausgerichtet sind, und wobei eine Öffnung (116) zwischen den zwei Klappen (110) vorgesehen ist.

11. Behälter nach Anspruch 10, bei welchem die Öffnung (116) angrenzend an die Kante (114) der vorderen Platte (103) oder hinteren Platte (102) angeordnet ist.

12. Behälter nach einem der Ansprüche 8 bis 11, bei welchem eine Lasche (109) an dem Verschlusselement (110) von einer der hinteren Platte (102) und der vorderen Platte (103) vorgesehen ist, und wobei ein Schlitz (108) in der anderen der vorderen Platte (103) oder hinteren Platte (102) zum Aufnehmen der Lasche (110) vorgesehen ist.

13. Behälter nach Anspruch 12, bei welchem die Lasche (110) in dem Schlitz (108) in einer verriegelnden Beziehung aufgenommen wird.

14. Behälter nach Anspruch 1, bei welchem das längliche Element (141) einen Schulterabschnitt (142) umfasst, der mit einem Ende mit dem Haken (117) verbunden ist und eine Biegung (143) an dem anderen Ende aufweist, die durch einen geraden Abschnitt (144) fortzusetzen ist, der sich nach hinten hinter eine durch den Haken definierte Position erstreckt.

15. Behälter nach Anspruch 1, bei welchem die Anbringungsanordnung (20) der Hülle (18) ein Paar an gegenüberliegenden Löchern (28) umfasst, wobei jedes Loch ein Ende des länglichen Elements (22) des Aufhängeelements (12) aufnimmt, um die Hülle (18) von dem Aufhängeelement (12) aufzuhängen.

16. Behälter nach einem der vorhergehenden Ansprüche, bei welchem die Trockenmittelanordnung einen Streifen (32) von fortlaufend verbundenen Trockenmittelbeuteln (16) umfasst, wobei angrenzende Beutel (16) durch ein quer verlaufendes Gewebe (34) zusammengefügt sind.

17. Behälter nach einem der Ansprüche 1 bis 15, bei welchem die Trockenmittelanordnung einen Mantel umfasst, der aus Trockenmittelbeuteln (145) ausgebildet ist, die symmetrisch zu einem mittigen Gewebe (146) angeordnet sind.

18. Behälter nach Anspruch 16 oder 17, bei welchem zumindest ein Gewebe (34, 146) eine in ihm definierte Öffnung (36, 147) aufweist, so dass der Streifen oder Mantel von Beuteln (16, 145) über das Aufhängeelement (12, 135) drapiert werden kann, bevor er in der Hülle (18, 101) aufgenommen wird.

19. Trockenmittelbehälter-Bausatz, wobei der Bausatz in Kombination umfasst
- ein Aufhängeelement (12, 135); wobei das Aufhängeelement (12, 135) ein längliches Element aus steifem Material und einen Haken (24, 117) umfasst, der im Wesentlichen mittig an dem länglichen Element angeordnet ist;
- eine Trockenmittelanordnung (14, 154) mit zumindest einem feuchtigkeitsdurchlässigen Behältnis, das einen Trockenmittelvorrat enthält, wobei die Trockenmittelanordnung ausgestaltet ist, bei Verwendung, von dem Aufhängeelement (12, 135) aufgehängt zu sein; und
- eine flexible, schützende Hülle (18, 154), wobei zumindest ein Teil von ihr feuchtigkeitsdurchlässig ist, ausgestaltet, um bei Verwendung um die Trockenmittelanordnung herum angebracht zu sein, wobei die Hülle (18, 101) aus einem flexiblen, leichtgewichtigen Material ist und an dem Aufhängeelement (12, 135) unabhängig von der Trockenmittelanordnung (14, 154) angebracht ist, derart dass, bei Verwendung, das Aufhängeelement (12, 135) das Gewicht der Trockenmittelanordnung (14, 154) trägt und die Hülle nicht lasttragend ist, und wobei die schützende Hülle (18, 101) eine Anbringungsanordnung (20, 116) zum Anbringen, bei Verwendung, an dem Aufhängeelement (12, 135) umfasst.

## Revendications

1. Récipient de déshydratant qui comporte
un élément de suspension (12, 135) pour la suspension dans une zone à partir de laquelle on désire retirer l'humidité ;
un dispositif déshydratant (14, 154) comprenant au moins un réceptacle perméable à l'humidité contenant une charge de déshydratant, le dispositif déshydratant étant suspendu à partir de l'élément de suspension (12, 135) ; et
un manchon de protection (18, 101), dont au moins une partie est perméable à l'humidité, disposé autour du dispositif déshydratant (14, 154),
dans lequel le manchon de protection (18, 101) comprend une formation de montage (20, 116) pour le montage sur l'élément de suspension (12, 135),
**caractérisé en ce que** l'élément de suspension (12, 135) comprend un élément allongé d'un matériau rigide et un crochet (24, 117) agencé essentiellement au centre sur l'élément allongé ;
et dans lequel le manchon est constitué d'un matériau léger et souple et est monté sur l'élément de suspension (12, 135) indépendamment du dispositif déshydratant, de sorte que l'élément de suspension (12, 135) supporte le poids du dispositif déshydratant (14, 154) et le manchon (18, 101) ne supporte pas de charge.

2. Récipient de la revendication 1, dans lequel le manchon (18, 101) est fabriqué à partir d'une ébauche plane (60, 120) d'une matière cellulosique.

3. Récipient de l'une quelconque des revendications précédentes, dans lequel le manchon (1-8, 101) a une paire de panneaux opposés arrière (40, 102) et avant (38, 103), un panneau avant opérationnelle (38, 103) ayant au moins un groupe d'ouvertures (48, 105) pour assurer la perméabilité à l'humidité et qui permet l'entrée d'humidité.

4. Récipient de la revendication 3, dans lequel la superficie des ouvertures (48, 105) dans le manchon de protection comprend de 2 à 50% de la surface totale du manchon de protection (16, 101).

5. Récipient de la revendication 3 ou 4, dans lequel les ouvertures (48, 105) sont de forme ronde ou rectangulaire et présentent un diamètre d'au moins 0,5 cm.

6. Récipient de l'une quelconque des revendications 3 à 5, dans lequel le panneau avant (38) et le panneau arrière (40) du manchon (18) sont reliés le long de leurs bords (66, 68) et sont courbés vers l'extérieur.

7. Récipient de la revendication 3 ou 4, dans lequel les panneaux latéraux (104) sont agencés entre le panneau avant (103) et le panneau arrière (102) pour obtenir un tube rectangulaire.

8. Récipient de l'une des revendications 3 à 6, dans lequel au moins une extrémité dudit panneau avant (38, 103) et/ou dudit panneau arrière (40, 102) se termine/terminent dans un élément de fermeture (42, 110, 118) qui ferme au moins une extrémité du manchon (18, 101).

9. Récipient de la revendication 8, dans lequel chaque élément de fermeture est sous la forme d'un rabat de fermeture (42).

10. Récipient de la revendication 8 ou 9, dans lequel l'élément de fermeture est formé de deux rabats de fermeture (110) alignés dans un agencement côte-à-côte le long d'un bord (114) du panneau avant (103) ou du panneau arrière (102) et une ouverture (115) est prévue entre les deux rabats (110).

11. Récipient de la revendication 10, dans lequel l'ouverture (116) est agencée de manière adjacente au bord (114) du panneau avant (103) ou du panneau arrière (102).

12. Récipient de l'une des revendications 8 à 11, dans lequel une languette (109) est prévue au niveau de l'élément de fermeture (110) de l'un du panneau arrière (102) et du panneau avant (103) et une fente (108) est prévue dans l'autre panneau du panneau avant (103) ou du panneau arrière (102) pour recevoir la languette (110).

13. Récipient de la revendication 12, dans lequel la languette (110) est reçue dans la fente (108) dans une relation d'interverrouillage.

14. Récipient de la revendication 1, dans lequel l'élément allongé (141) comprend une partie d'épaulement (142) reliée avec une extrémité au crochet (117) et ayant une spire (143) sur l'autre extrémité pour se poursuivre par une section droite (144) s'étendant vers l'arrière au-delà d'une position définie par le crochet.

15. Récipient de la revendication 1, dans lequel la formation de montage (20) du manchon (18) comprend une paire de trous opposés (28), chaque trou recevant une extrémité de l'élément allongé (22) de l'élément de suspension (12) pour suspendre le manchon (18) à partir de l'élément de suspension (12).

16. Récipient de l'une quelconque des revendications précédentes, dans lequel le dispositif déshydratant comprend une bande (32) de sachets déshydratants reliés en série (16) avec les sachets adjacents (16) étant reliés entre eux par une sangle s'étendant transversalement (34).

17. Récipient de l'une des revendications 1 à 15, dans lequel le dispositif déshydratant comprend une couverture formée de sachets déshydratants (145) agencés symétriquement par rapport à une sangle centrale (146).

18. Récipient de la revendication 16 ou 17, dans lequel au moins une sangle (34, 146) a une ouverture (36, 147) définie dans celle-ci de sorte que la bande ou la couverture de sachets (16, 145) puisse être drapée sur l'élément de suspension (12, 135) avant d'être reçue dans le manchon (18, 101).

19. Kit de récipient de déshydratant, le kit comportant, en combinaison,
un élément de suspension (12, 135) ; l'élément de suspension (12, 135) comprenant un élément allongé d'un matériau rigide et un crochet (24, 117) agencé essentiellement au centre sur l'élément allongé ;
un dispositif déshydratant (14, 154) comprenant au moins un réceptacle perméable à l'humidité contenant une charge de déshydratant, le dispositif déshydratant étant configuré pour être suspendu, lors de l'utilisation, à partir de l'élément de suspension (12, 135) ; et
un manchon de protection souple (18, 101), dont au moins une partie est perméable à l'humidité, configuré pour être monté, lors de l'utilisation, autour du dispositif déshydratant, dans lequel le manchon (18, 101) est constitué d'un matériau léger et souple et est monté sur l'élément de suspension (12, 135) indépendamment du dispositif déshydratant (14, 154), de sorte que, lors de l'utilisation, l'élément de suspension (12, 135) supporte le poids du dispositif déshydratant (14, 154) et le manchon ne supporte pas de charge, et dans lequel le manchon de protection (18, 101) comprend une formation de montage (20, 116) pour le montage, lors de l'utilisation, sur l'élément de suspension (12, 135).
